# EUROPEAN PATENT SPECIFICATION

(11) **EP 3 656 584 B1**
(45) Date of publication and mention of the grant of the patent: **16.06.2021**
(21) Application number: 19210604.5
(22) Date of filing: 21.11.2019
(51) Int. Cl.: B60C 19/00, B60C 9/02, B60C 9/20

(54) **TIRE**
REIFEN
PNEUMATIQUE

(30) Priority: 26.11.2018 JP 2018220206
(43) Date of publication of application: 27.05.2020
(73) Proprietor: Toyo Tire Corporation, Itami-shi, Hyogo 664-0847 (JP)
(72) Inventor: YOSHIDA, Koji, Itami-shi, Hyogo 664-0847 (JP)
(74) Representative: Müller-Boré & Partner Patentanwälte PartG mbB

(56) References cited:
- CN-A- 107 264 189
- KR-A- 20100 120 505
- US-A- 4 911 217
- US-A1- 2010 122 757

## Description

### BACKGROUND OF THE INVENTION

### Field of the Invention

The present invention relates to a tire in which an electronic component is embedded.

### Related Art

Conventionally, tires in which an electric component such as an RFID tag is embedded within the rubber structure have been known. With such tires, by an RFID tag embedded in the tire and a reader as an external device carrying out communication, it is possible to perform production control of tires, usage history management, etc. For example, Patent Document 1 discloses a tire arranging a chip assembled with the electronic component having an antenna arranged at a portion adjacent to an inner liner.
US 4 911 217 A discloses a combination pneumatic tire and integrated circuit transponder for tire identification. US 2010/122757 A1 discloses a tire and electronic device assembly including an electronic device in which a transponder tag is coupled to a dipole antenna formed by first and second elongate antenna segments.

Patent Document 1: Japanese Unexamined Patent Application, Publication No. 2005-335384

### SUMMARY OF THE INVENTION

As shown in Patent Document 1, in a case of arranging the electronic component in a portion adjacent to the inner liner, since the distance from the outer surface of the tire until the electronic component will be far, there is concern over the communication quality declining when the electronic component performs communication with the outside, etc. In addition, Patent Document 1 shows that it is also possible to arrange an electronic component between the carcass and the side wall; however, the sidewall is a portion which greatly deflects by the contact patch of the tire with the road surface during tire rolling, and there is a possibility of the electronic component no longer keeping the function thereof, if the electronic component greatly deforms following the deflection of this tire.

The present invention has been made taking account of the above-mentioned problem, and an object thereof is to provide a tire capable of protecting an electronic component even in a case of the tire deflecting.

A tire (for example, the tire 1) according to a first aspect of the present invention includes: a tread (for example, the tread 12) having a ring-shaped steel belt (for example, the steel belt 26) which extends in a circumferential direction of the tire; a pair of beads (for example, the beads 11) having a bead core (for example, the bead core 21) and a bead filler (for example, the bead filler 22) which extends to an outer side in a tire-radial direction of the bead core; and a carcass ply (for example, the carcass ply 23) which extends from one of the beads to the other of the beads, in which an electronic component (for example, the RFID tag 40) covered by a rubber sheet (for example, the rubber sheets 431, 432) is disposed on a tire outer surface side of the carcass ply in a region between a tire-radial direction outside end of the bead filler (for example, the tire-radial direction outside end 22A of the bead filler) and a tire-width direction outside end of the steel belt (for example, the tire-width direction outside end 26A of the steel belt), in which the rubber sheet includes a first rubber sheet (for example, the first rubber sheet 431) disposed on a tire inner cavity side of the electronic component, and a second rubber sheet (for example, the second rubber sheet 432) disposed on a tire outer surface side of the electronic component, and in which the second rubber sheet is configured from a rubber sheet which is more difficult to deform than the first rubber sheet.

According to the present invention, in the tire as described in the first aspect, the second rubber sheet is configured from rubber of higher modulus than the first rubber sheet.

According to a third aspect of the present invention, in the tire as described in the second aspect, an outer surface of the carcass ply may be covered by coating rubber (for example, the coating rubber 23C), and the modulus of the coating rubber may be no higher than the modulus of the first rubber sheet.

According to a fourth aspect of the present invention, in the tire as described in any one of the first to third aspects, the second rubber sheet may be thicker than the first rubber sheet.

According to a fifth aspect of the present invention, in the tire as described in any one of the first to fourth aspects, thickness of the second rubber sheet may differ in a longitudinal direction of the rubber sheet.

According to a sixth aspect of the present invention, in the tire as described in any one of the first to fifth aspects, the electronic component covered by the rubber sheet may be disposed between the carcass ply and a rubber member (for example, the side-wall rubber 30 disposed on a tire outer surface side of the carcass ply, and the first rubber sheet may be pasted to the carcass ply.

According to the present invention, it is possible to provide a tire capable of protecting an electronic component even in a case of the tire deflecting.

### BRIEF DESCRIPTION OF THE DRAWINGS

FIG. 1 is a view showing a half section in a tire-width direction of a tire according to a first embodiment of the present invention;
FIG. 2 is a partially enlarged cross-sectional view of a tire according to the first embodiment of the present invention;
FIG. 3A is a view showing an RFID tag covered by two rubber sheets, in the tire according to the first embodiment of the present invention;
FIG. 3B is a view showing a cross section along the line b-b in FIG. 3A;
FIG. 3C is a view showing a cross section along the line c-c in FIG. 3A;
FIG. 4 is a view showing a state in the vicinity of the RFID tag 40 when the tire deflects;
FIG. 5 is a view showing an example forming a second rubber sheet from a rubber sheet which is thicker than a first rubber sheet;
FIG. 6 is a view showing an example making the thickness in the vicinity of both ends of the second rubber sheet to be thicker;
FIG. 7 is a view showing an example making the thickness in the vicinity of a central part of the second rubber sheet to be thicker;
FIG. 8 is a view showing a cross section prior to interposing the RFID tag by rubber sheets in a case of not filling rubber into a spring antenna;
FIG. 9 is a view showing a cross section after interposing an RFID tag by rubber sheets, in a case of not filling rubber into the spring antenna;
FIG. 10 is a view showing a cross section after interposing the RFID tag by rubber sheets, in a case of not filling rubber into a spring antenna;
FIG. 11 is a view showing a cross section of the RFID tag prior to filling rubber into a spring antenna, in a tire according to a second embodiment of the present invention;
FIG. 12 is a view showing a cross section of the RFID tag after filling rubber into a spring antenna, in a tire according to the second embodiment of the present invention;
FIG. 13 is a view showing a cross section of the RFID tag prior to interposing by rubber sheets, in a tire according to the second embodiment of the present invention; and
FIG. 14 is a view showing a cross section of the RFID tag interposed by rubber sheets, in a tire according to the second embodiment of the present invention.

### DETAILED DESCRIPTION OF THE INVENTION

### <First Embodiment>

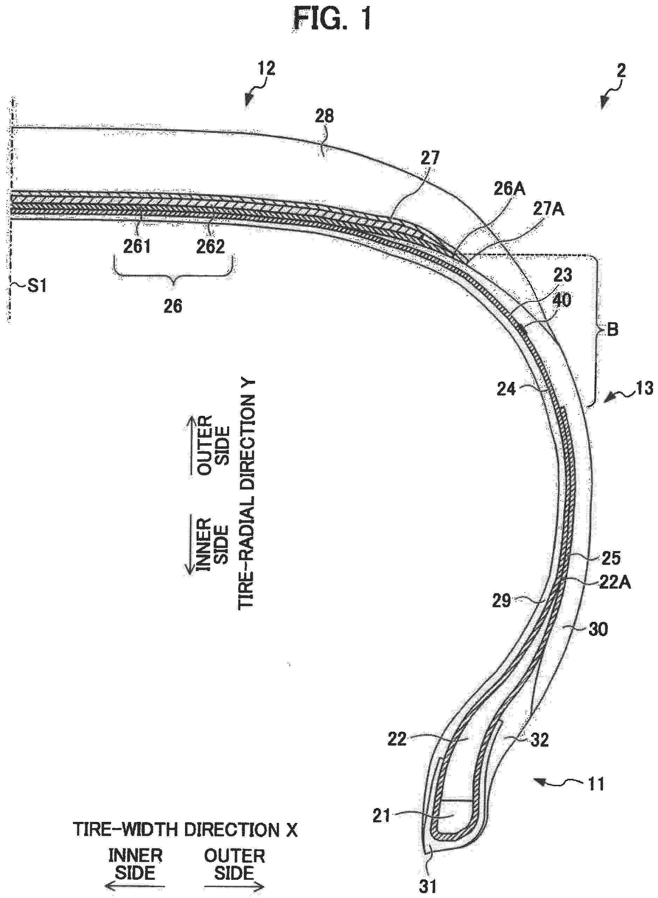

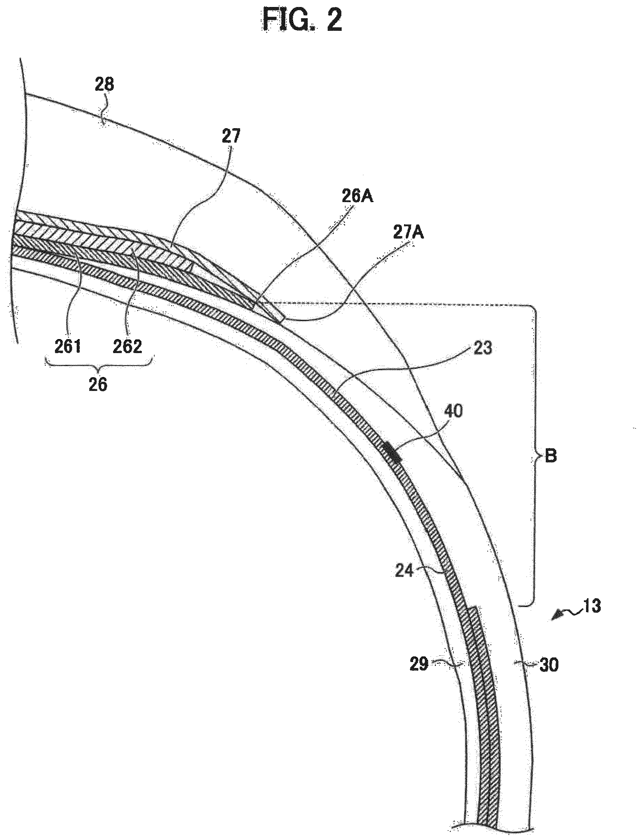

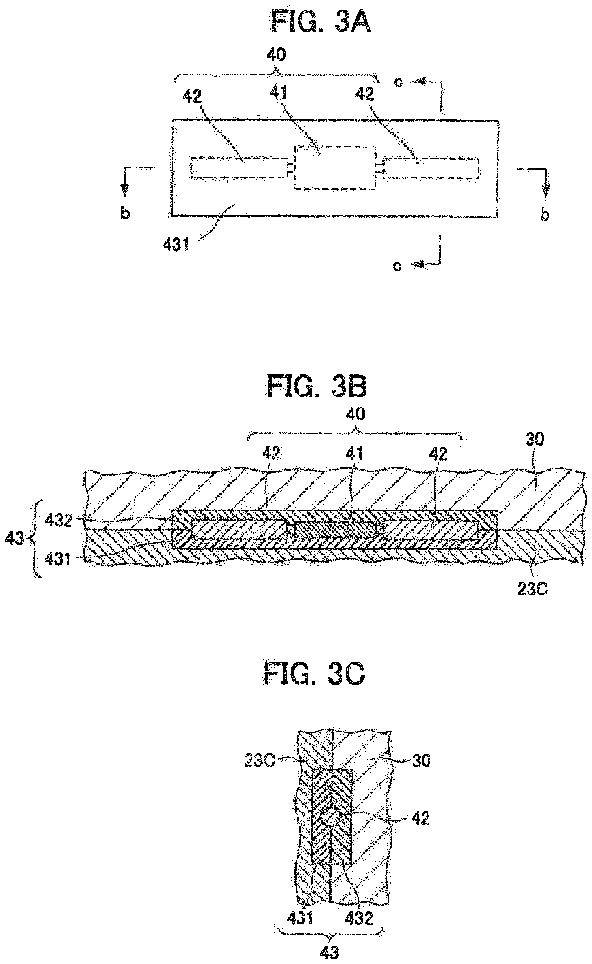

Hereinafter, a first embodiment of the present invention will be explained while referencing the drawings. FIG. 1 is a view showing a half section in a tire-width direction of a tire 1 according to the present embodiment. The basic structure of the tire 1 is left/right symmetric in the cross section of the tire-width direction; therefore, a cross-sectional view of the right half is shown herein. In the drawings, the reference symbol S1 is the tire equatorial plane. The tire equatorial plane S1 is a plane orthogonal to the tire rotation axis, and is positioned in the center of the tire-width direction. Herein, tire-width direction is a direction parallel to the tire rotation axis, and is the left/right direction of the paper plane of the cross-sectional view in FIG. 1. In FIG. 1, it is illustrated as the tire-width direction X. Then, inner-side of tire-width direction is a direction approaching the tire equatorial plane S1, and is the left side of the paper plane in FIG. 1. Outer side in the tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer-side in the tire-radial direction is a direction distancing from the tire rotation axis, and is the upper side of the paper plane in FIG. 1. Inner-side in the tire-radial direction is a direction approaching the tire rotational axis, and is the lower side of the paper plane in FIG. 1. The same also applies to FIGS. 2 and 3.

The tire 1 is a tire for passenger cars, for example, and includes a pair of beads 11 provided at both sides in the tire-width direction, a tread 12 forming the contact patch with the road surface, and a pair of side walls 13 extending between the pair of beads 11 and the tread 12.

The bead 11 includes an annular bead core 21 formed by wrapping around several times bead wires made of metal coated with rubber, and a bead filler 22 of tapered tip shape extending to the outer side in the tire-radial direction of the bead core 21. The bead core 21 is a member which plays a role of fixing a tire 1 filled with air to the rim of a wheel which is not illustrated. The bead filler 22 is a member provided in order to raise the rigidity of the bead peripheral part and to ensure high maneuverability and stability, and is configured from rubber of a higher modulus than the surrounding rubber members, for example.

A carcass ply 23 constituting a ply serving as the skeleton of the tire 1 is embedded inside of the tire 1. The carcass ply 23 extends from one bead core 21 to the other bead core 21. In other words, it is embedded in the tire 1 between the pair of bead cores 21, in a form passing through the pair of side walls 13 and the tread 12. As shown in FIG. 1, the carcass ply 23 includes a ply body 24 which extends from one bead core 21 to the other bead core 21, and extends between the tread 12 and bead 11, and a ply folding part 25 which is folded around the bead core 21. In the present embodiment, the ply folding part 25 is overlapped with the ply body 24. The carcass ply 23 is configured by a plurality of ply cords extending in the tire-width direction. In addition, a plurality of ply cords is arranged side by side in a tire circumferential direction. This ply cord is configured by an insulating organic fiber cord such as polyester or polyamide, or the like, and is covered by coating rubber 23C (not illustrated in FIG. 1).

In the tread 12, at least one ring-shaped steel belt 26 which extends in a circumferential direction of the tire is provided in the outer side in the tire-radial direction of the carcass ply 23. The steel belt 26 is configured by a plurality of steel cords covered by rubber. By providing the steel belts 26, the rigidity of the tire is ensured, and the contact state of the road surface with the tread 12 improves. In the present embodiment, although two layers of steel belts 261, 262 are provided, the number of layered steel belts 26 is not limited thereto.

At the outer side in the tire-radial direction of the steel belt 26, a cap ply 27 serving as a belt reinforcement layer is provided. The cap ply 27 is configured from an insulating organic fiber layer such as of polyamide fibers, and is covered by rubber. By providing the cap ply 27, it is possible to achieve an improvement in durability and a reduction in road noise while travelling. In the present embodiment, the tire-width direction outside end 27A of the cap ply 27 extends more to the outer side in the tire-width direction than the tire-width direction outside end 26A of the steel belt 26.

The tread rubber 28 is provided at the outer side in the tire-radial direction of the cap ply 27. A tread pattern (not illustrated) is provided to the outer surface of the tread rubber 28, and this outer surface serves as a contact patch which contacts with the road surface.

In the bead 11, side wall 13 and tread 12, an inner liner 29 serving as a rubber layer constituting an inside wall surface of the tire 1 is provided to a tire inner cavity side of the carcass ply 23. The inner liner 29 is configured by air permeation resistant rubber, whereby the air inside the tire inner cavity is prevented from leaking to outside.

In the side wall 13, the side wall rubber 30 constituting the outer wall surface of the tire 1 is provided to the outer side in the tire-width direction of the carcass ply 23. This side wall rubber 30 is a portion which bends the most upon the tire 1 exhibiting a cushioning action, and usually flexible rubber having fatigue resistance is adopted therein. Herein, as shown in FIG. 1, the side-wall rubber 30 extends towards the tread 12. On the other hand, the tread rubber 28 extends towards the side wall 13. As a result thereof, at the tire outer surface side in a partial region of the carcass ply 23, the tread rubber 28 and side-wall rubber 30 enter a laminated state. In more detail, in a region in which both the side-wall rubber 30 and tread rubber 28 exist, i.e. transition region of side wall 13 and tread 12, the side-wall rubber 30 and tread rubber 28 enter a laminated state in order at the outer surface side of the carcass ply 23.

A chafer 31 is provided on the inner side in the tire-radial direction of the carcass ply 23 provided around the bead core 21 of the bead 11. The chafer 31 also extends to the outer side in the tire-width direction of the ply folding part 25 of the carcass ply 23, and rim strip rubber 32 is further provided at the outer side in the tire-width direction thereof. The outer side in the tire-width direction of this rim strip rubber 32 connects with the side wall rubber 30.

An RFID tag 40 is embedded as an electrical component in the tire 1 of the present embodiment. The RFID tag 40 is a passive transponder equipped with an RFID chip and an antenna for performing communication with external equipment, and performs wireless communication with a reader (not illustrated) serving as the external equipment. In a storage part inside the RFID chip, identification information such as a manufacturing number and part number is stored. The RFID tag 40 of the present embodiment is embedded in the tire 1, in a state covered by the protective member 43 described later.

As shown in FIG. 1, the RFID tag 40 is embedded in a region between a tire-radial direction outside end 22A of the bead filler 22, and a tire-width direction outside end 26A of the steel belt 26. In other words, the RFID tag 40 is arranged at a position sufficiently distanced from the bead core 21 made of metal, which has a possibility of adversely influencing communication. Herein, the bead core 21 is a metal member having a particularly high possibility of adversely influencing the communication, due to being formed in a ring shape by winding in layers the metal bead wires.

In addition, the RFID tag 40 is arranged to be separated so as not to contact with the steel belt 26. Consequently, communication failure will not occur by the antenna length changing substantially from contact between the antenna of the RFID tag 40 and the steel belt 26. It should be noted that the antenna length of the RFID tag 40 is optimized depending on the frequency band of radio waves to be used, etc., and communication failure will not occur if contacting with the electronic component and the antenna length changes.

Herein, additionally for the present embodiment, the cap ply 27 extends more to the outside in the tire-width direction more than the steel belt 26. Then, the RFID tag 40 is provided in a region between the tire-radial direction outside end 22A of the bead filler 22, and the tire-width direction outside end 27A of the cap ply 27. According to this configuration, the RFID tag 40 is reliably prevented from contacting with the steel belt 26.

When explaining the present embodiment in further detail, the RFID tag 40 is arranged in the buttress vicinity B which is a portion on the outer side in the tire-radial direction of the side wall 13, and is adjacent to the ground contact end of the tread 12. Buttress vicinity B indicates within a range of 20% of the cross-section height in the inside direction of the tire-radial direction, with the tire-width direction outside end 26A of the steel belt 26 as a reference. Herein, cross-section height is a numerical value decided by the tire size and, for example, in the case of a tire of a size such as 195/65R15, becomes "cross-section height = designated width x ellipticity = 195x0.65 = 126.75 mm".

By arranging in the buttress vicinity B in this way, it is possible to arrange the RFID tag 40 in the vicinity of the farthest region from the bead core 21, which is a metal component having a particularly high possibility of adversely influencing communication, in a range not coming close to the steel belt 26.

FIG. 2 is an enlarged cross-sectional view showing the periphery of an embedded part of the RFID tag 40 in the tire 1 of FIG. 1. As shown in FIG. 2, the RFID tag 40 is arranged on a tire outer surface side of the carcass ply 23, in the buttress vicinity B. More specifically, the RFID tag 40 is pasted to the carcass ply 23 on which the coating rubber 23C (not illustrated in FIG. 2) is coated, and the side-wall rubber 30 is provided so as to cover the tire outer surface side thereof. By arranging the RFID tag 40 on the tire outer surface side of the carcass ply 23 in this way, the distance from the RFID tag 40 to the tire outer surface becomes short, whereby it is possible to achieve an improvement in communication property.

Then, the RFID tag 40 of the present embodiment is covered by the two rubber sheets 431, 432 serving as the protective member 43, as shown in FIGS. 3A to 3C. FIG. 3A is a view of the RFID tag 40 covered by the rubber sheets 431, 432 seen from the side of the first rubber sheet 431, and the RFID tag 40 is covered to be hidden by the first rubber sheet 431. FIG. 3B is a cross-sectional view along the line b-b in FIG. 3A, and the peripheral part of the rubber sheets 431, 432, i.e. coating rubber 23C of the carcass ply 23, and cross-section of the side-wall rubber 30 are shown together in this drawing. FIG. 3C is a cross-sectional view along the line c-c in FIG. 3A, and the peripheral part of the rubber sheets 431, 432 are shown together in this drawing.

The RFID tag 40 includes an RFID chip 41 and antenna 42 for performing communication with external equipment. As the antenna 42, a coil-shaped spring antenna, plate-shaped antenna, and various types of rod-shaped antennas can be used. For example, it may be an antenna formed by printing a predetermined pattern on a flexible substrate. When considering the communicability and flexibility, a coil-shaped spring antenna is the most preferable. The antenna is established at an antenna length optimized according to the frequency band, etc. to be used.

Among the rubber sheets covering this RFID tag 40, the first rubber sheet 431 is a rubber sheet on the tire inner cavity side. On the other hand, the second rubber sheet 432 is a rubber sheet on the tire outer surface side. Therefore, as shown in FIGS. 3B and 3C, a side of the first rubber sheet 431 contacts with the coating rubber 23C of the carcass ply 23, and a side of the second rubber sheet 432 contacts with the side-wall rubber 30. Then, the RFID tag 40 covered by the rubber sheets 431, 432 is embedded in the tire 1 so that the longitudinal direction thereof becomes the direction of the tangential line relative to the circumferential direction of the tire 1, i.e. direction orthogonal to the paper plane in the cross-sectional views of FIGS. 1 and 2.

In the present embodiment, the second rubber sheet 432 on the tire outer surface side is configured from a rubber sheet which is more difficult to deform than the first rubber sheet 431 on the tire inner cavity side. More specifically, by causing the combination of rubber materials to differ, or the like, the second rubber sheet 432 is configured so as to be rubber of higher modulus than the first rubber sheet 431. It should be noted that the modulus indicates 100% elongation modulus (M100) under a 23°C atmosphere, measured in accordance with "3.7 stress at a given elongation, S" of JIS K6251:2010.

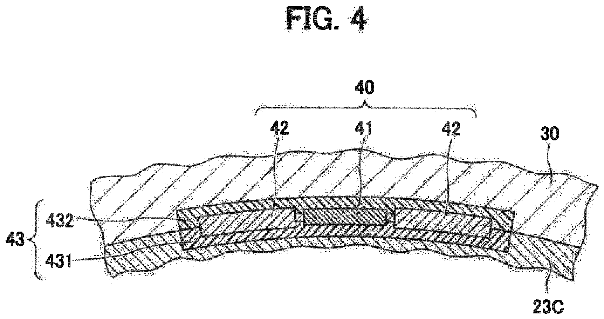

The buttress vicinity B is an ideal site as the embedding position of the RFID tag 40 when considering communication quality; however, this site more greatly deflects by the contact patch of the tire 1 with the road surface during tire rolling. More specifically, the buttress vicinity B on the side making ground contact with the road surface swells so as to project to the outer side in the tire-width direction. FIG. 4 is a view showing a state of the periphery of the RFID tag 40 arranged in the buttress vicinity B, when the tire 1 deflects.

Consequently, in order to reduce the deformation amount of the RFID tag 40 produced by this deflection, among the rubber sheets covering the RFID tag 40, the second rubber sheet 432 on the tire outer surface side is configured from rubber of high modulus. It thereby becomes possible to reduce the deformation amount at the periphery of the RFID tag 40 also in the case of the tire 1 deflecting during tire rolling, and it is possible to mitigate strain on the RFID tag 40.

On the other hand, the first rubber sheet 431 on the tire inner cavity side is configured from rubber of low modulus. It thereby becomes possible to absorb the difference between the deformation amount of the RFID tag 40 and deformation amount of the carcass ply 23 by the first rubber sheet 431 of low modulus, also in the case of the tire 1 deflecting. In addition, the modulus of the coating rubber 23C of the carcass ply 23 may be set to no more than, i.e. less than or equal to, whereby the difference between the deformation amount of the RFID tag 40 and deformation amount of the carcass ply 23 may be absorbed by the first rubber sheet 431 and coating rubber 23C.

In addition, so long as being rubber of low modulus, it is also easy to establish properties such that enhance adhesiveness. Consequently, it is possible to enhance the strength of bonding between the coating rubber 23C of the carcass ply 23 and the first rubber sheet 431, by making the adhesive force of the first rubber sheet 431 higher than the adhesive force of the second rubber sheet 432. The bonding state between the carcass ply 23 and RFID tag 40, which are members having greatly differing physical properties such as rigidity and thermal expansion coefficient, thereby stabilizes. Consequently, effects such as a stable bonding state can be obtained in the manufacturing process of the tire 1 such as the molding step and vulcanization step, and during use of the tire 1.

It should be noted that, even when considering the absorbing of stress during tire deformation, the relationship of the magnitudes of modulus of each rubber member, it is preferable for the modulus of the second rubber sheet 432 to be higher than the modulus of the first rubber sheet 431, and the modulus of the first rubber sheet 431 to be higher than the modulus of the coating rubber 23C. Alternatively, the modulus of the coating rubber 23C may be equal to the modulus of the first rubber sheet 431. In other words, the relationship of magnitudes of modulus is preferably "second rubber sheet 432" > "first rubber sheet 431" > "coating rubber 23C", or "second rubber sheet 432" > "first rubber sheet 431" = "coating rubber 23C".

It should be noted that, by blending filler such as short-fiber filler into the rubber sheet, and adjusting the blending amount thereof, it is also possible to establish the second rubber sheet 432 as a rubber sheet which is difficult to deform. For example, more short-fiber filler may be mixed into the second rubber sheet 432 than the first rubber sheet 431. Alternatively, short-fiber filler may be mixed only into the second rubber sheet 432. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber.

In addition, it is also possible to embed an organic fiber layer only in the second rubber sheet 432 so as to establish a rubber sheet which is more difficult to deform than the first rubber sheet 431.

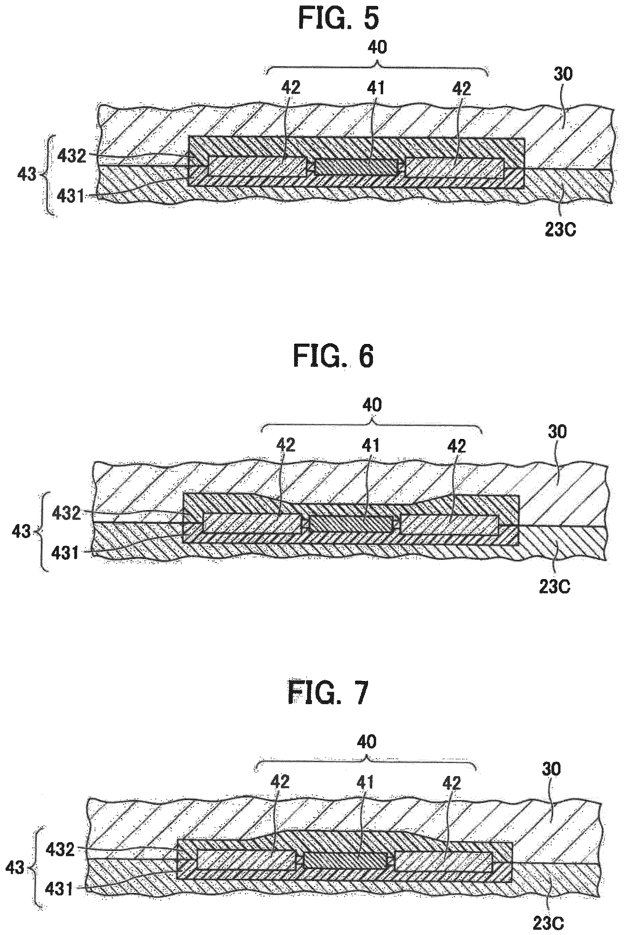

In addition, as shown in FIG. 5, by forming the second rubber sheet 432 from a thicker rubber sheet than the first rubber sheet 431, it is also possible to establish as a rubber sheet which is more difficult to deform than the first rubber sheet 431.

Furthermore, as shown in FIG. 4, considering that the periphery of the embedding part of the RFID tag 40 swells so as to project to the outer side in the tire-width direction upon the tire 1 making ground contact with the road surface, a rubber sheet for which the thickness varies in the longitudinal direction thereof may be used as the second rubber sheet 432. More specifically, as shown in FIG. 6, the thickness of the rubber sheet in the vicinity of both ends having large deformation amount may be thickened. By making the thickness in the longitudinal direction of the second rubber sheet 432 differ in this way, and providing a thick part in the vicinity of both ends and a thin part in the vicinity of the central part, it is possible to effectively curb the deformation amount of the RFID tag 40 overall.

In addition, in a case of wanting to prioritized protect the RFID chip 41 of the RFID tag 40, or a case of wanting to predominantly protect the bonding part of the antenna 42 with the RFID chip 41, the thickness of the rubber sheet in the peripheral part of the portion desired to protect may be thickened. More specifically, as shown in FIG. 7, the thickness in the vicinity of the central part of the second rubber sheet 432 may be thickened. In other words, by making the thickness in the longitudinal direction of the second rubber sheet 432 to differ, and providing thin parts in the vicinity of both ends and a thick part in the vicinity of the central part, it is possible to predominantly protect the RFID chip 41, or the bonding part of the antenna 42 with the RFID chip 41. In addition, instead of making the thickness of the second rubber sheet 432 partially thicker, the modulus of this portion may be raised. In other words, in this case, a rubber sheet in which the modulus varies in the longitudinal direction thereof is used as the second rubber sheet 432.

In these configurations, the second rubber sheet 432 is configured by a rubber sheet for which it is more difficult to deform than the first rubber sheet 431, and further, in the second rubber sheet 432, the ease of deformation differs in the longitudinal direction thereof.

It should be noted that, so long as configuring the protective member 43 by the two rubber sheets 431, 432 in the aforementioned way, since it will be possible to form a thin RFID tag 40 including the protective member 43, it will be favorable upon embedding in the tire 1. In addition, when assembling the RFID tag 40 to the constitutional members of the tire 1 prior to vulcanization, the RFID tag 40 covered by the rubber sheets 431, 432 can installed extremely simply. For example, at a desired position of a member such as the carcass ply 23 and side-wall rubber 30 prior to vulcanization, it is possible to appropriately paste the RFID tag 40 covered by the rubber sheets 431, 432 using the adhesiveness of raw rubber. In addition, by also establishing the rubber sheets 431, 432 as raw rubber prior to vulcanization, it is possible to paste more simply also using the adhesiveness of the rubber sheets 431, 432 themselves.

It should be noted that the position at which embedding the RFID tag 40 is not limited to the buttress vicinity B, and is sufficient so long as a region between the tire-radial direction outside end 22A of the bead filler 22 and the tire-width direction outside end 26A of the steel belt 26. This region is a favorable arrangement position of the RFID tag 40 when considering communication quality; however, due to being a region which greatly deflects upon the tire 1 rolling, the effect obtained when adopting the rubber sheets 431, 432 of the present embodiment is high.

It should be noted that, in the present embodiment, the RFID tag 40 is arranged between the carcass ply 23 and side-wall rubber 30; however, the rubber members arranged on the tire outer surface side of the RFID tag 40 is not limited to the sidewall rubber 30, and may be another rubber member.

It should be noted that, in the present embodiment, although the RFID tag 40 is embedded in the tire 1 as the electronic component, the electronic component embedded in the tire 1 is not limited to RFID tags. For example, it may be various electronic components such as a sensor performing wireless communication. In addition, since the electronic component handles electrical information such as the transmission of electrical signals, there is a possibility of the performance declining due to metal components being present in the vicinity. In addition, there is a possibility of the electronic component being damaged by excessive stress acting thereon. Therefore, it is possible to obtain the effects of the present invention also in the case of embedding various electronic components in the tire 1. For example, the electronic component may be a piezoelectric element or strain sensor.

According to the tire 1 according to the present embodiment, the follow effects are exerted.
(1) In the tire 1 of the present embodiment, the RFID tag 40 covered by rubber sheets is arranged in a region between the tire-radial direction outside end 22A of the bead filler 22 and the tire-width direction outside end 26A of the steel belt 26, on the tire outer surface side of the carcass ply 23; the rubber sheets include the first rubber sheet 431 arranged on the tire inner cavity side of the RFID tag 40 and the second rubber sheet 432 arranged on the tire outer surface side of the RFID tag 40; and the second rubber sheet 432 is configured by a rubber sheet which is more difficult to deform than the first rubber sheet 431. It thereby becomes possible to protect the electrical component also in a case of the tire 1 deflecting, while maintaining the communication quality of the RFID tag 40.
(2) In the tire 1 of the present embodiment, the second rubber sheet 432 is configured from rubber of higher modulus than the first rubber sheet 431. It is thereby possible to obtain the effect of (1) with a simple configuration.
(3) In the tire 1 of the present embodiment, the outer surface of the carcass ply 23 is covered by the coating rubber 23C; the modulus of the second rubber sheet 432 is higher than the modulus of the first rubber sheet 431; and the modulus of the coating rubber 23C is no more than the modulus of the first rubber sheet 431. It is thereby possible to absorb the difference between the deformation amount of the RFID tag 40 and the deformation amount of fiber cords in the carcass ply 23 during tire deformation more effectively, using the first rubber sheet 431 and the coating rubber 23C.
(4) In the tire 1 of the present embodiment, the second rubber sheet 432 is thicker than the first rubber sheet 431. It is thereby possible to obtain the effect of (1) with a simple configuration.
(5) In the tire 1 of the present embodiment, the second rubber sheet 432 as a thickness that differs in the longitudinal direction of the rubber sheet. It is thereby possible to effectively protect predominantly a portion having great deformation amount, or portion desired to protect predominantly.
(6) In the tire 1 of the present embodiment, the RFID tag 40 covered by the rubber sheet is arranged between the carcass ply 23 and the side-wall rubber 30 serving as a rubber member arranged on the tire outer surface side of the carcass ply 23, and the first rubber sheet 431 is pasted to the carcass ply. The manufacturing process of the tire 1 in which the effect of (1) is obtained thereby becomes simple.

### <Second Embodiment>

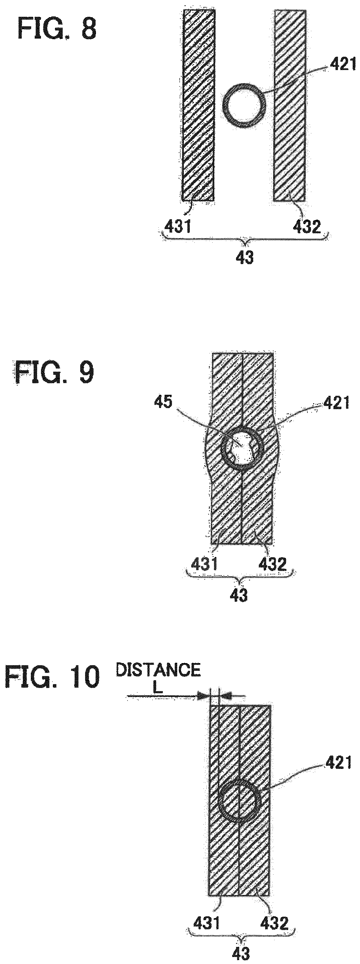

Next, a tire 1 according to a second embodiment will be explained while referencing FIGS. 8 to 14. It should be noted that, in the following explanation, the same reference symbols will be attached for configurations which are the same as the first embodiment, and detailed explanations thereof will be omitted. The present embodiment is a particularly preferable embodiment in the case of the antenna of the RFID tag 40 being a coil-shaped spring antenna.

In the RFID tag 40 of the present embodiment, a coil-shaped spring antenna 421 having high communicability and flexibility can be used as the antenna. The spring antenna 421 is set to an antenna length which was optimized according to the frequency band, etc. to be used.

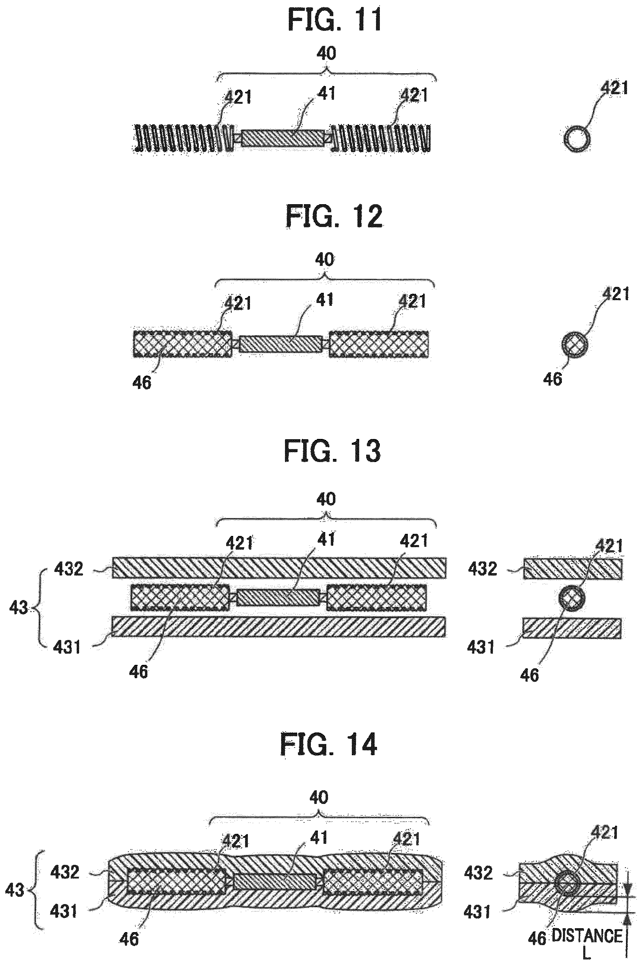

In the present embodiment, prior to interposing the RFID tag 40 by the two rubber sheets 431, 432 constituting the protective member 43, the rubber is arranged within the spring antenna 421. More preferably, rubber is filled into the spring antenna, so that air will not remain as much as possible. This process and the reason for adopting this process will be explained using FIGS. 12 to 18. It should be noted that, in the present embodiment, the second rubber sheet 432 on the tire outer surface side is configured from a rubber sheet which is more difficult to deform than the first rubber sheet 431 on the tire inner cavity side. For example, the second rubber sheet 432 is configured from a rubber sheet of higher modulus than the first rubber sheet 431.

First, a state of the surroundings of the RFID tag 40 in a case of not filling rubber into the spring antenna 421 will be explained as a reference example using FIGS. 8 to 10. FIG. 8 is a view showing a cross section of the spring antenna 421, and rubber sheets 431, 432, prior to interposing the RFID tag 40 by the rubber sheets 431, 432. FIG. 9 is a view showing a cross section of the spring antenna 421, and rubber sheets 431, 432, after interposing the RFID tag 40 by the rubber sheets 431, 432.

As shown in FIG. 9, in this reference example, since rubber is not filled into the spring antenna 421 in advance, a certain amount of air 45 may remain within the spring antenna 421 after interposing by the rubber sheets 431, 432. If air remains in this way, the integrity of the rubber sheets 431, 432 and the spring antenna 421 becomes insufficient, and when the tire 1 deforms, there is concern over the spring antenna 421 not following the motion of the rubber, and the RFID tag 40 having the spring antenna 421 being damaged.

It should be noted that raw rubber before vulcanization is used as the rubber sheets 431, 432 herein. Consequently, by pushing the rubber sheets 431, 432 from both sides, the rubber sheets 431, 432 sticks to some extent inside the spring antenna as shown in FIG. 9. However, very large amounts of time and labor are required in order to stick the rubber sheets 431, 432 until the inside of the spring antenna is completely embedded.

Then, even if assuming a case of taking time and sticking the rubber sheets 431, 432 until the inside of the spring antenna is embedded, the distance L between the outer circumferential part of the spring antenna 421 and the outer surface of the rubber sheets 431, 432 becomes very short, as shown in FIG. 10. In addition, it is difficult to stabilize this distance L, and locally thin portions can occur. Consequently, the protection of the RFID tag 40 by the rubber sheets 431, 42 becomes insufficient, and during vulcanization, there is a possibility of the rubber sheets 431, 432 being damaged. If the rubber sheet is damaged, there is also a possibility of the effect produced by configuring the second rubber sheet 432 from a rubber sheet which is more difficult to deform than the first rubber sheet 431 no longer being obtained.

Therefore, in the present embodiment, prior to interposing the RFID tag 40 by the rubber sheets 431, 432, the rubber is arranged within the spring antenna 421, as shown in FIGS. 11 to 14. More preferably, rubber is filled within the spring antenna so that air does not remain as much as possible. It should be noted that the views shown on the right sides of FIGS. 11 to 14 are views showing a cross section of the spring antenna 421 and the surrounding thereof.

FIG. 11 is a view showing a state prior to filling the rubber 46 into the spring antenna 421, and FIG. 12 is a view showing a state after filling the rubber 46 into the spring antenna 421. The rubber 46 is embedded so as to be almost the same outside diameter as the outer circumferential face of the spring antenna 421. Then, in the case of the rubber 46 escaping from the outer circumferential face of the spring antenna 421, it is preferable to wipe off this portion. In other words, the outer circumferential face of the rubber 46 is preferably molded so as to become substantially the same surface as the outer circumferential face of the spring antenna 421. It should be noted that the rubber 46 may be filled into the spring antenna 421, and the outer circumference of the spring antenna 421 may be thinly wrapped by the rubber 46. On the other hand, if thickly wrapping the spring antenna 421 by the rubber 46, in addition to the flexibility of the spring antenna 421 being harmed, the dimension in the width direction formed by the rubber sheets 431, 432 after interposing the RFID tag 40 becomes larger, which is not preferable. It should be noted that the rubber 46 may be embedded so as to become substantially the same outside diameter as the inner circumferential face of the spring antenna 421. It is desirable for the outer circumferential part of the rubber 46 to be located within the range of the inner circumferential face and outer circumferential face of the spring antenna 421.

Herein, rubber having flexibility is used as the rubber 46 in order to ensure the flexibility of the spring antenna 421. However, it is preferable to use rubber of a modulus higher than the rubber sheets 431, 432 as the rubber 46, in consideration of the workability, etc. It should be noted that preferably unvulcanized rubber is used as the rubber 46 arranged within the spring antenna 421. By establishing the rubber 46 and rubber sheets 431, 432 as unvulcanized rubber and vulcanizing simultaneously, the integrity of the rubber 46, rubber sheets 431, 432 and spring antenna 421 rises. In addition, the rubber 46, and rubber sheets 431, 432 are more preferably established as the same type of rubber. It should be noted that, by emphasizing the flexibility of the spring antenna 421, rubber of lower modulus than the rubber sheets 431, 432 may be used as the rubber 46. In addition, rubber of substantially the same modulus, and rubber of the same material may be used. It should be noted that vulcanized rubber may be used as the rubber 46 arranged within the spring antenna 421. In addition, rubber-based adhesive, rubber-based filler, etc. can also be used. Taking account of configuring so as not to leave air within the spring antenna 421 as much as possible, while ensuring flexibility, it is possible to adopt various rubber-based materials. As the arranging operation of the rubber 46, various methods can be adopted; however, for example, it is also possible to inject rubber into the spring antenna 421 using a syringe. In this case, a set appropriate amount of the rubber 46 may be filled using a syringe. In addition, after filling a large amount of the rubber 46, portions protruding from the outer circumference of the spring antenna 421 may be wiped off.

FIG. 13 is a view showing a state prior to interposing the RFID tag 40 into which the rubber 46 is filled in the spring antenna 421, by the rubber sheets 431, 432, and FIG. 14 is a view showing a state after interposing by the rubber sheets 431, 432.

As shown in FIG. 14, according to the present embodiment, since the rubber 46 is filled in advance into the spring antenna 421, no air pockets exist between the rubber sheets 431, 432. Consequently, since it is unnecessary to be concerned over air pockets, the process of interposing the RFID tag 40 by the rubber sheets 431, 432 also becomes easy. In addition, by the rubber 46 being arranged within the spring antenna 421, the integrity of the spring antenna 421, rubber 46, and rubber sheets 431, 432 rises, and when the tire 1 deforms, the spring antenna 421 follows the movement of the rubber. Consequently, the durability of the RFID tag 40 having the spring antenna 421 also improves.

In addition, according to the present embodiment, the distance L between the outer circumferential part of the spring antenna 421 and the outer circumferential face of the rubber sheets 431, 432 stabilizes. In other words, a distance close to the thickness of the rubber sheets 431, 432 is generally secured as this distance L. Consequently, the RFID tag 40 is sufficiently protected by the rubber sheets 431, 432. In the case of an embodiment in which the RFID tag 40 is embedded between the carcass ply 23 and side-wall rubber 30 as in the tire of the present embodiment, i.e. case of embedding in a portion close to the outer surface of the tire 1, such air pocket countermeasures and enhanced protection measures are particularly effective.

In the present embodiment, the RFID tag 40 interposed by the rubber sheets 431, 432 is arranged in the tire so that the first rubber sheet 431 is positioned on the tire outer surface side of the carcass ply 23. For example, among the rubber sheets covering the RFID tag 40, the first rubber sheet 431 is pasted to the carcass ply 23, and subsequently, is covered by the side-wall rubber 30. Alternatively, among the rubber sheets covering the RFID tag 40, the second rubber sheet 432 is pasted to the side-wall rubber 30, and subsequently, the first rubber sheet 431 covering the sidewall rubber 30 and RFID tag 40 is pasted to the carcass ply 23. The RFID tag 40 is arranged in the green tire in this way, and subsequently, the green tire is vulcanized.

According to the tire 1 of the present embodiment, the following effects are exerted in addition to the above (1) to (6) .

(7) The present embodiment provides a step of arranging the rubber 46 within the spring antenna 421 of the RFID tag 40 serving as an electronic component having a communication function; a step of interposing the RFID tag 40 having the spring antenna 421 into which the rubber 46 was arranged, by the rubber sheet 431 and the second rubber sheet 432 configured from a rubber sheet which is more difficult to deform than the first rubber sheet 431; and a step of arranging the first rubber sheet 431 so as to position on the tire outer surface side of the carcass ply 23. Air will thereby not remain inside the spring antenna 421. In addition, since it is unnecessary to be concerned about air pockets, the work of interposing the RFID tag 40 by the rubber sheets 431, 432 also becomes easy. In such a configuration, the RFID tag 40 is sufficiently protected by the rubber sheets 431, 432 during the vulcanization process.

It should be noted that, although the tire of the present invention can be adopted as various types of tires such as for cars, light trucks, trucks and buses, it is particularly suitable as a tire for automobiles. It should be noted that the present invention is not to be limited to the above-mentioned embodiments, and that even when carrying out modifications, improvements, etc. within a scope of the appended claims it is encompassed by the scope of the present invention.

### EXPLANATION OF REFERENCE NUMERALS

- 1: tire
- 11: bead
- 12: tread
- 13: side wall
- 21: bead core
- 22: bead filler
- 22A: tire-radial direction outside end of bead filler
- 23: carcass ply
- 23C: coating rubber
- 24: ply body
- 25: ply folding part
- 26: steel belt
- 26A: tire-width direction outside end of steel belt
- 27: cap ply
- 28: tread rubber
- 29: inner liner
- 30: side-wall rubber
- 31: chafer
- 32: rim strip rubber
- 40: RFID tag
- 41: RFID chip
- 42: antenna
- 421: spring antenna
- 43: protective member
- 431: first rubber sheet
- 432: second rubber sheet
- 46: rubber

## Claims

1. A tire (1) comprising:
a tread (12) having a ring-shaped steel belt (26) which extends in a circumferential direction of the tire;
a pair of beads (11) having a bead core (21) and a bead filler (22) which extends to an outer side in a tire-radial direction of the bead core (21); and
a carcass ply (23) which extends from one of the beads (11) to the other of the beads (11),
wherein an electronic component (40) covered by a rubber sheet (431, 432) is disposed on a tire outer surface side of the carcass ply (23) in a region between a tire-radial direction outside end (22A) of the bead filler (22) and a tire-width direction outside end (26A) of the steel belt (26),
wherein the rubber sheet (431, 432) includes a first rubber sheet (431) disposed on a tire inner cavity side of the electronic component (40), and a second rubber sheet (432) disposed on a tire outer surface side of the electronic component (40), and
wherein the second rubber sheet (432) is configured from rubber of higher 100% elongation modulus under a 23°C atmosphere, measured in accordance with "3.7 stress at a given elongation, S" of JIS K6251:2010, than the first rubber sheet (431).

2. The tire according to claim 1, wherein an outer surface of the carcass ply (23) is covered by coating rubber (23C), and
wherein the modulus of the coating rubber (23C) is no higher than the modulus of the first rubber sheet (431).

3. The tire according to claim 1 or 2, wherein the second rubber sheet (432) is thicker than the first rubber sheet (431).

4. The tire according to any one of claims 1 to 3, wherein thickness of the second rubber sheet (432) differs in a longitudinal direction of the rubber sheet.

5. The tire according to any one of claims 1 to 4, wherein the electronic component (40) covered by the rubber sheet (431, 432) is disposed between the carcass ply (23) and a rubber member (30) disposed on a tire outer surface side of the carcass ply (23), and the first rubber sheet (431) is pasted to the carcass ply (23).

## Patentansprüche

1. Reifen (1), aufweisend:
eine Lauffläche (12), die einen ringförmigen Stahlgürtel (29) aufweist, der sich in einer Umfangsrichtung des Reifens erstreckt;
ein Paar von Wülsten (11), die einen Wulstkern (21) und einen Wulstfüller (22) aufweisen, der sich in einer Reifenradialrichtung des Wulstkerns (21) zu einer Außenseite erstreckt; und
eine Karkassenlage (23), die sich von einem der Wülste (11) zu dem anderen der Wülste (11) erstreckt,
wobei auf einer Reifenaußenflächenseite der Karkassenlage (23) in einem Bereich zwischen einem äußeren Ende (22A) des Wulstfüllers (22) in Reifenradialrichtung und einem äußeren Ende (26A) des Stahlgürtels (26) in Reifenbreitenrichtung eine elektronische Komponente (40) angeordnet ist, die von einer Gummischicht (431, 432) bedeckt ist,
wobei die Gummischicht (431, 432) eine erste Gummischicht (431), die auf einer Reifeninnenhohlraumseite der elektronischen Komponente (40) angeordnet ist, und eine zweite Gummischicht (432) aufweist, die auf einer Reifenaußenflächenseite der elektronischen Komponente (40) angeordnet ist, und
wobei die zweite Gummischicht (432) aus Gummi mit einem höheren 100%-Dehnungsmodul unter einer 23°C-Atmosphäre als die erste Gummischicht (431) ausgestaltet ist, gemessen gemäß "3.7 Spannung bei einer gegebenen Dehnung S" nach JIS K6251:2010.

2. Reifen nach Anspruch 1, wobei eine Außenfläche der Karkassenlage (23) von Beschichtungsgummi (23C) bedeckt ist, und
wobei der Modul des Beschichtungsgummis (23C) nicht höher ist als der Modul der ersten Gummischicht (431).

3. Reifen nach Anspruch 1 oder 2, wobei die zweite Gummischicht (432) dicker ist als die erste Gummischicht (431).

4. Reifen nach einem der Ansprüche 1 bis 3, wobei die Dicke der zweiten Gummischicht (432) in einer Längsrichtung der Gummischicht unterschiedlich ist.

5. Reifen nach einem der Ansprüche 1 bis 4, wobei die elektronische Komponente (40), die von der Gummischicht (431, 432) bedeckt ist, zwischen der Karkassenlage (23) und einem Gummielement (30) angeordnet ist, das auf einer Reifenaußenflächenseite der Karkassenlage (23) angeordnet ist, und die erste Gummischicht (431) an die Karkassenlage (23) geklebt ist.

## Revendications

1. Pneu (1), comprenant :
une bande de roulement (12) présentant une ceinture en acier annulaire (26) qui s'étend dans une direction circonférentielle du pneu ;
une paire de talons (11) présentant une tringle de talon (21) et un bourrage sur tringle (22) qui s'étend vers un côté externe dans une direction radiale de pneu de la tringle de talon (21); et
un pli de carcasse (23) qui s'étend à partir de l'un des talons (11) vers l'autre des talons (11),
dans lequel un composant électronique (40) recouvert par une feuille de caoutchouc (431, 432) est disposé sur un côté de surface externe de pneu du pli de carcasse (23) dans une région entre une extrémité extérieure de direction radiale de pneu (22A) du bourrage sur tringle (22) et une extrémité extérieure de direction de largeur de pneu (26A) de la ceinture en acier (26),
dans lequel la feuille de caoutchouc (431, 432) inclut une première feuille de caoutchouc (431) disposée sur un côté de cavité interne de pneu du composant électronique (40), et une seconde feuille de caoutchouc (432) disposée sur un côté de surface externe de pneu du composant électronique (40), et
dans lequel la seconde feuille de caoutchouc (432) est configurée à partir de caoutchouc présentant un module d'allongement de 100 % supérieur sous une atmosphère à 23°C, mesuré selon « 3.7 contrainte à un allongement donné S » de JIS K6251:2010, à la première feuille de caoutchouc (431).

2. Pneu selon la revendication 1, dans lequel une surface externe du pli de carcasse (23) est recouverte par un caoutchouc de revêtement (23C), et dans lequel le module du caoutchouc de revêtement (23C) n'est pas supérieur au module de la première feuille de caoutchouc (431).

3. Pneu selon la revendication 1 ou 2, dans lequel la seconde feuille de caoutchouc (432) est plus épaisse que la première feuille de caoutchouc (431).

4. Pneu selon l'une quelconque des revendications 1 à 3, dans lequel une épaisseur de la seconde feuille de caoutchouc (432) diffère dans une direction longitudinale de la feuille de caoutchouc.

5. Pneu selon l'une quelconque des revendications 1 à 4, dans lequel le composant électronique (40) recouvert par la feuille de caoutchouc (431, 432) est disposé entre le pli de carcasse (23) et un élément de caoutchouc (30) disposé sur un côté de surface externe de pneu du pli de carcasse (23), et la première feuille de caoutchouc (431) est collée au pli de carcasse (23).
